# EUROPÄISCHE PATENTSCHRIFT

(11) **EP 1 302 521 B1**
(45) Veröffentlichungstag und Bekanntmachung des Hinweises auf die Patenterteilung: **05.03.2008**
(21) Anmeldenummer: 02020113.3
(22) Anmeldetag: 13.09.2002
(51) Int. Cl.: C09J 133/06, C09J 7/02

(54) **Polyacryl-Haftklebemassen**
Pressure sensitive polyacrylate adhesive
Adhésif polyacrylate sensible à la pression

(30) Priorität: 12.10.2001 DE 10150197
(43) Veröffentlichungstag der Anmeldung: 16.04.2003
(73) Patentinhaber: tesa AG, 20253 Hamburg (DE)
(72) Erfinder: Husemann, Marc, 22605 Hamburg (DE); Zöllner, Stephan, 21244 Buchholz/Nordheide (DE)

(56) Entgegenhaltungen:
- EP-A- 0 317 694
- DE-A- 2 856 009
- PATENT ABSTRACTS OF JAPAN Bd. 0123, Nr. 58 (C-531), 26. September 1988 (1988-09-26) & JP 63 113092 A (ASAHI CHEM IND CO LTD), 18. Mai 1988 (1988-05-18)

## Beschreibung

Die Erfindung betrifft Haftklebemassen auf Poly(meth)acrylatbasis, die eine geringe Klebkraft aufweisen und homogen sind.

Für industrielle Anwendungen werden sehr häufig Acrylathaftklebebänder eingesetzt. Dies gilt insbesondere für Verklebungen, die in einem weiten Temperaturbereich vorgenommen werden oder wo Lösemittelbeständigkeit erforderlich ist, wo die Haftklebemasse transparent sein sollte und letztendlich die Haftklebemasse unter Sauerstoff oder Ozon auch nicht altem und somit witterungsstabil sein sollte.
Für diese Anwendungen haben sich Acrylathaftklebemassen bewährt. Ein Nachteil dieser Haftklebemassen ist, daß Polyacrylate in der Regel relativ polar sind (durch die Vielzahl der Estergruppierungen) und daher polare Wechselwirkungen mit dem Substrat ausbilden. Als Folge steigt mit der Zeit die Klebkraft an und das Haftklebeband läßt sich nur schwer wieder entfernen. In vielen Fällen verbleiben zudem Klebemasserückstände auf dem Substrat. Polyacrlyathaftklebebänder zeigen somit in der Regel ein Aufziehverhalten.
Es existieren aber eine Vielzahl von weiteren Anwendungen, die neben dem geringen Aufziehverhalten auch eine geringe Klebkraft erfordern. Gerade wenn Haftklebebänder nach der Erfüllung ihres Einsatzzweckes von Hand entfernt werden, werden häufig geringe Klebkräfte verlangt und gefordert.

Somit besteht ein Bedarf für eine Acrylathaftklebemasse, die eine geringe Sofortklebkraft besitzt, bei einer Verklebung auf einer polaren Oberfläche auch nach einer längeren Zeit nicht aufzieht und sich dann auch wiederum rückstandsfrei und leichtgängig vom Substrat entfernen lässt.

Um dieses Problem zu lösen, wurden verschiedene Ansätze verfolgt. Eine Möglichkeit stellt die Reduzierung der Verklebungsfläche durch Strukturierung dar. Ansätze hierfür wurden in den Schriften WO 85/04602 A1, US 4,587,152, US 5,194,299, US 4,889,234 und US 6,123,890 gegeben. Durch die chemische Zusammensetzung weisen die dort vorgestellten Haftklebemassen dennoch ein Aufziehverhalten auf. Die Reversibilität beruht auf der Reduzierung der Haftklebefläche.

Ein weiterer Ansatz stellt die chemische Modifikation durch z.B. Polysiloxaneinheiten dar (US 4,693,935). In der Regel wird durch diese Veränderung die aktive Klebefläche verringert, aber die restlichen Bereiche weisen dennoch ein Aufziehverhalten auf.

Ein weitere Möglichkeit besteht in der Ausbildung von 2-Phasenstrukturen. So wurde z.B. in der DE 28 56 009 A1 Stearinsäure mit einem Polyacrylat vermischt, welches über Epoxidfunktionen vernetzt wurde. Durch die gewählte Polarität des Basispolymers bildet sich bei einem prozentualen Anteil von 5 bis 15 % Stearinsäure ein mikrophasensepariertes Gemisch, wobei sich auf der Oberfläche harte Stearinsäuredomänen ausbilden, die die Klebkraft reduzieren. Diese 2-Phasengemische weisen aber in der Regel den Nachteil auf, daß die Systeme bei längerer Temperaturbelastung nicht stabil sind und sich die Klebkräfte verändern. So kann sich z.B. bei einer verlängerten Lagerzeit unter erhöhten Temperaturen die Stearinsäure verstärkt an der Oberfläche anreichern und somit die Klebkraft weiter herabsetzen. Im Extremfall reduziert sich die Klebkraft auf 0, und das Haftklebeband ist nicht mehr einsetzbar. Dieses Phänomen läßt sich zum einen durch die Nichtverträglichkeit mit dem Polymer erklären und zum anderen dadurch, daß die Stearinsäure nicht in den Vernetzungsprozeß mit eingebaut wird und somit frei in der Polymermatrix beweglich ist.

Generell ist Stearinsäure für viele unpolare Haftklebemassen ein günstiger Füllstoff. Stearinsäure wird z.B. in Acrylonitril-Butadien-Copolymerisaten als Füllmaterial eingesetzt (US 4,117,199) oder in Poly-α-olefine (US 5,202,193) sowie in Polyamiden (US 6,238,732). Der Einfluß auf die klebtechnischen Eigenschaften bleibt aber ungeklärt.

Es besteht somit der Bedarf für eine Polyacrylathaftklebemasse, die ohne technische Modifizierung (Strukturierung) oder chemische Modifikation eine geringe Klebkraft auf polaren Untergründen sowie eine sehr gute thermische Stabilität über einen Zeitraum von mindestens 3 Monaten aufweist.

Überraschenderweise und für den Fachmann nicht vorhersehbar wird die Aufgabe gelöst durch die erfindungsgemäßen Haftklebemassen, wie sie im Hauptanspruch sowie in den Unteransprüchen dargestellt sind.

Demnach betrifft die Erfindung eine Haftklebemasse auf Polyacrylatbasis, enthaltend zumindest eine Mischung aus
(i) einem Polymer einer Monomermischung aus zumindest den folgenden Komponenten
   (i.a) 28 bis 93.9 Gew.-% (bezogen auf die Monomermischung) Acrylsäureester und/oder Methacrylsäureester mit der folgenden Formel

      CH₂ = C(R₁)(COOR₂),

      wobei R₁ = H oder CH₃ und R₂ ein linearer oder verzweigter Alkylrest mit 1 bis 14 C-Atomen ist,
   (i.b) 5 bis 35 Gew.-% (bezogen auf die Monomermischung) Acrylsäureester und/oder Methacrylsäureester der folgenden Formel

      CH₂ = C(R₃)(COOR₄),

      wobei R₃ = H oder CH₃ und R₄ ein linearer oder verzweigter aliphatischer Alkylrest mit mindestens 16 C-Atomen oder ein cyclischer aliphatischer Rest mit mindestens 9 C-Atomen ist,
   (i.c) 1,1 bis 7 Gew.-% (bezogen auf die Monomermischung) freie Acrylsäure und/oder Methacrylsäure
(ii) 1 bis 10 Gew.-% (bezogen auf das Polymergemisch) Stearinsäure,
   dadurch gekennzeichnet, daß
   - die Haftklebemasse homogen ist und keine Segmente mit einer Größe von > 5 nm aufweist
   - die Haftklebemasse bei einem Masseauftrag von 20 g/m² eine Klebkraft auf Stahl von weniger als 1,5 N/cm aufweist und sich die Klebkraft bei einer Lagerung von 50 °C über einen Zeitraum von 3 Monaten nicht um mehr als 20 % verändert.

"Homogen" im obigen Sinne bedeutet, daß das Polymergemisch optisch verträglich ist, also optisch (Mikroskop) keine Inhomogenitäten zu erkennen sind. Dies ist insbesondere durch ein klares Beschichtungsbild ohne Eintrübungen zu erkennen. Die Verträglichkeit besteht dabei bis auf Nanometerebene, es treten dementsprechend keine Entmischungsphasen oder Segmentbildungen (Bereiche abweichender Härte oder Weichheit) auf, welche größer als 5 nm sind.

In einer bevorzugten Ausführungsform der erfindungsgemäßen Haftklebemasse sind der Monomermischung als Komponente
(i.d) bis zu 30 Gew.-% olefinisch ungesättigte Monomere mit funktionellen Gruppen zugesetzt.

Sehr bevorzugt werden für Monomere im Sinne der Komponente (i.a) Acrylmomonere eingesetzt, die Acryl- und Methacrylsäureester mit Alkylgruppen bestehend aus 4 bis 14 Atomen, bevorzugt 4 bis 9 C-Atomen umfassen. Spezifische Beispiele, ohne sich durch diese Aufzählung einschränken zu wollen, sind n-Butylacrylat, n-Pentylacrylat, n-Hexylacrylat, n-Heptylacrylat, n-Octylacrylat, n-Nonylacrylat, Laurylacrylat und deren verzweigten Isomere, wie z.B. 2-Ethylhexylacrylat oder Isooctylacrylat. Weitere einzusetzende Verbindungsklassen, die ebenfalls, bevorzugt in geringen Mengen, unter (i.a) hinzugesetzt werden können, sind z. B. die korrespondierenden Methacrylate.

Im Sinne der Komponente (i.b) werden bevorzugt als langkettiger aliphatischer Acrylsäureester Stearylacrylat und/oder als cyclischer Acrylsäureester Isobornylacrylat (Bicycloverbindung) und/oder Adamantylacrylat (Tricycloverbindung) eingesetzt. Neben diesen Beispielen können aber prinzipiell auch alle weiteren Acrylsäureester mit langkettigen Alkoholresten (C > 16) verwendet werden, da diese einen hinreichend unpolaren Charakter aufweisen, und/oder entsprechende cyclische Verbindungen, wobei diese, wie anhand der genannten Beispiele bereits angedeutet wurde, auch Brücken-, Käfig- oder kompliziertere cyclische Strukturen aufweisen können. Auch hier lassen sich die entsprechenden Methacrylverbindungen vorteilhaft einsetzen.

Für die Monomere der Komponente (i.d) werden Vinylester, Vinylether, Vinylhalogenide, Vinylidenhalogenide, Vinylverbindungen mit aromatischen Cyclen und Heterocyclen in α-Stellung eingesetzt. Auch hier seien nicht ausschließlich einige Beispiele genannt: Vinylacetat, Vinylformamid, Vinylpyridin, Ethylvinylether, Vinylchlorid, Vinylidenchlorid und Acrylonitril. In einer weiteren sehr bevorzugten Vorgehensweise für die Monomere der Komponente (i.d) Monomere mit folgenden funktionellen Gruppen eingesetzt: Hydroxy-, Carboxy-, Epoxy-, Säureamid-, Isocyanato- oder Aminogruppen.

In einer weiteren vorteilhaften Variante werden für die Komponente (i.d) Acrylmonomere entsprechend der folgenden allgemeinen Formel eingesetzt, 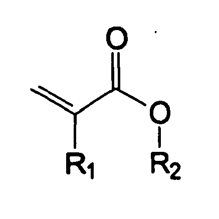 wobei R₁ = H oder CH₃ ist und der Rest -OR₂ die funktionelle Gruppe der Haftklebemasse darstellt oder beinhaltet und z.B. in einer besonders bevorzugten Auslegung eine H-Donor Wirkung besitzt, die eine UV-Vernetzung -erleichtert.

Besonders bevorzugte Beispiele für die Komponente (i.d) sind Hydroxyethylacrylat, Hydroxypropylacrylat, Hydroxyethylmethacrylat, Hydroxypropylmethacrylat, Allylalkohol, Maleinsäureanhydrid, Itaconsäureanhydrid, Itaconsäure, Acrylamid und Glyceridylmethacrylat, Benzylacrylat, Benzylmethacrylat, Phenylacrylat, Phenylmethacrylat, t-Butylphenylacrylat, t-Butylaphenylmethacrylat, Phenoxyethylacrlylat, Phenoxyethylmethacrylat, 2-Butoxyethylmethacrylat, 2-Butoxyethylacrylat, Dimethylaminoethylmethacrylat, Dimethylaminoethylacrylat, Diethylaminoethylmethacrylat, Diethylaminoethylacrylat, Cyanoethylmethacrylat, Cyanoethylacrylat, Gycerylmethacrylat, 6-Hydroxyhexylmethacrylat, N-tert.-Butylacrylamid, N-Methylolmethacrylamid, N-(Buthoxymethyl)methacrylamid, N-Methylolacrylamid, N-(Ethoxymethyl)acrylamid, N-Isopropylacrylamid, Vinylessigsäure, Tetrahydrofurfurylacrylat, β-Acryloyloxypropionsäure, Trichloracrylsäure, Fumarsäure, Crotonsäure, Aconitsäure, Dimethylacrylsäure, wobei diese Aufzählung nicht abschließend ist.

In einer weiteren bevorzugten Ausführungsform der erfindungsgemäßen Haftklebemasse werden für die Komponente (i.d) aromatische Vinylverbindungen eingesetzt, wobei bevorzugt die aromatischen Kerne aus C₄- bis C₁₈-Bausteinen bestehen und auch Heteroatome enthalten können. Besonders bevorzugte Beispiele sind Styrol, 4-Vinylpyridin, N-Vinylphthalimid, Methylstyrol, 3,4-Dimethoxystyrol, 4-Vinylbenzoesäure.

Zur Weiterentwicklung können den Polyacrylathaftklebemassen Harze beigemischt sein. Als zuzusetzende klebrigmachende Harze sind ausnahmslos alle vorbekannten und in der Literatur beschriebenen Klebharze einsetzbar. Genannt seien stellvertretend die Pinen-, Inden- und Kolophoniumharze, deren disproportionierte, hydrierte, polymerisierte, veresterte Derivate und Salze, die aliphatischen und aromatischen Kohlenwasserstoffharze, Terpenharze und Terpenphenolharze sowie C5-, C9- sowie andere Kohlenwasserstoffharze. Beliebige Kombinationen dieser und weiterer Harze können eingesetzt werden, um die Eigenschaften der resultierenden Klebmasse wunschgemäß einzustellen. Im allgemeinen lassen sich alle mit dem entsprechenden Polyacrylat kompatiblen (löslichen) Harze einsetzen, insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze. Auf die Darstellung des Wissensstandes im "Handbook of Pressure Sensitive Adhesive Technology" von Donatas Satas (van Nostrand, 1989) sei ausdrücklich hingewiesen.

Weiterhin können optional Weichmacher (Plastifizierungsmittel), Füllstoffe (z. B. Fasern, Ruß, Zinkoxid, Titandioxid, Kreide, Voll- oder Hohlglaskugeln, Mikrokugeln aus anderen Materialien, Kieselsäure, Silikate), Keimbildner, Blähmittel, Compoundierungsmittel und/oder Alterungsschutzmittel, z.B. in Form von primären und sekundären Antioxidantien oder in Form von Lichtschutzmitteln zugesetzt sein.

Weiterhin betrifft die Erfindung ein Verfahren, welches geeignet ist, die vorstehend beschriebenen Haftklebemassen herzustellen. Hierbei wird
- zunächst eine Monomermischung enthaltend zumindest die folgenden Komponenten:
   (i.a) 28 bis 93,9 Gew.-% (bezogen auf die Monomermischung) Acrylsäureester und/oder Methacrylsäureester mit der folgenden Formel

      CH₂ = C(R₁)(COOR₂),

      wobei R₁ = H oder CH₃ und R₂ ein linearer oder verzweigter Alkylrest mit 1 bis 14 C-Atomen ist,
   (i.b) 5 bis 35 Gew.-% (bezogen auf die Monomermischung)
      Acrylsäureester und/oder Methacrylsäureester mit der folgenden Formel

      CH₂ = C(R₃)(COOR₄),

      wobei R₃ = H oder CH₃ und R₄ ein linearer oder verzweigter aliphatischer Alkylrest mit mindestens 16 C-Atomen oder ein cyclischer aliphatischer Rest mit mindestens 9 C-Atomen ist,
   (i.c) 1,1 bis 7 Gew.-% (bezogen auf die Monomermischung)
      freie Acrylsäure und/oder Methacrylsäure
   zu einem Polymer polymerisiert,
- woraufhin das Polymer mit
   (ii) 1 bis 10 Gew.-% Stearinsäure,
   vermischt wird,
- dem Polymergemisch weiterhin
   (iii) 0,1 bis 2.5 Gew.-% eines thermischen Vernetzers
   zugesetzt sind und
- eine Vernetzung des Polymergemisches derart durchgeführt wird, daß eine vernetzte Polyacrylathaftklebemasse resultiert.

Zur Polymerisation werden die Monomere dermaßen gewählt, daß die resultierenden Polymere als industriell verwendbare Haftklebemassen eingesetzt werden können, insbesondere derart, daß die resultierenden Polymere haftklebende Eigenschaften entsprechend des Handbook of Pressure Sensitive Adhesive Technology" von Donatas Satas (van Nostrand, New York 1989) besitzen. Für diese Anwendungen liegt die statische Glasübergangstemperatur des resultierenden Polymers vorteilhaft unterhalb 15 °C liegen.

Zur Herstellung der Polyacrylathaftklebemassen werden konventionelle radikalische Polymerisationen oder kontrollierte radikalische Polymerisationen durchgeführt. Für die radikalisch verlaufenden Polymerisationen werden bevorzugt Initiatorsysteme eingesetzt, die zusätzlich weitere radikalische Initiatoren zur Polymerisation enthalten, insbesondere thermisch zerfallende radikalbildende Azo- oder Peroxo-Initiatoren. Prinzipiell eignen sich hierfür jedoch alle für Acrylate bekannten üblichen Initiatoren. Die Produktion von C-zentrierten Radikalen ist im Houben Weyl, Methoden der Organischen Chemie, Vol. E 19a, S. 60 - 147 beschrieben. Diese Methoden werden in bevorzugter Weise in Analogie angewendet.
Beispiele für Radikalquellen sind Peroxide, Hydroperoxide und Azoverbindungen, als einige nicht ausschließliche Beispiele für typische Radikalinitiatoren seien hier genannt Kaliumperoxodisulfat, Dibenzoylperoxid, Cumolhydroperoxid, Cyclohexanonperoxid, Di-t-butylperoxid, Azodiisosäurebutyronitril, Cyclohexylsulfonylacetylperoxid, Diisopropylpercarbonat, t-Butylperoktoat, Benzpinacol. In einer sehr bevorzugten Auslegung wird als radikalischer Initiator 1,1'-Azo-bis-(cyclohexancarbonsäurenitril) (Vazo 88^{™} der Fa. DuPont) verwendet.

Die mittleren Molekulargewichte Mₙ der bei der kontrollierten radikalischen Polymerisation entstehenden Haftklebemassen werden derart gewählt, daß sie in einem Bereich von 20.000 und 2.000.000 g/mol liegen; speziell für die weitere Verwendung als Schmelzhaftkleber werden Haftklebemassen mit mittleren Molekulargewichten Mₙ von 100.000 bis 500.000 g/mol hergestellt. Die Bestimmung des mittleren Molekulargewichtes erfolgt über Größenausschlußchromatographie (Gelpermeationschromatographie, SEC oder GPC) oder Matrix-unterstützte Laser-Desorption/ionisations-Massenspektrometrie (MALDI-MS).

Die Polymerisation kann in Substanz, in Gegenwart eines oder mehrerer organischer Lösungsmittel, in Gegenwart von Wasser oder in Gemischen aus organischen Lösungsmitteln und Wasser durchgeführt werden. Es wird dabei angestrebt, die verwendete Lösungsmittelmenge so gering wie möglich zu halten. Geeignete organische Lösungsmittel oder Gemische von Lösungsmitteln sind reine Alkane (Hexan, Heptan, Octan, Isooctan), aromatische Kohlenwasserstoffe (Benzol, Toluol, Xylol), Ester (Essigsäureethylester, Essigsäurepropyl-, butyl-, oder -hexylester), halogenierte Kohlenwasserstoffe (Chlorbenzol), Alkanole (Methanol, Ethanol, Ethylenglycol, Ethylenglycolmonomethylether) und Ether (Diethylether, Dibutylether) oder Gemische davon. Die wäßrigen Polymerisationsreaktionen können mit einem mit Wasser mischbaren oder hydrophilen Colösungsmittel versetzt werden, um zu gewährleisten, daß das Reaktionsgemisch während des Monomerumsatzes in Form einer homogenen Phase vorliegt. Vorteilhaft verwendbare Colösungsmittel für die vorliegende Erfindung werden gewählt aus der folgenden Gruppe, bestehend aus aliphatischen Alkoholen, Glycolen, Ethern, Glycolethern, Pyrrolidinen, N-Alkylpyrrolidinonen, N-Alkylpyrrolidonen, Polyethylenglycolen, Polypropylenglycolen, Amiden, Carbonsäuren und Salzen davon, Estern, Organosulfiden, Sulfoxiden, Sulfonen, Alkoholderivaten, Hydroxyetherderivaten, Aminoalkoholen, Ketonen und dergleichen, sowie Derivaten und Gemischen davon.
Die Polymerisationszeit beträgt - je nach Umsatz und Temperatur - zwischen 4 Und 72 Stunden. Je höher die Reaktionstemperatur gewählt werden kann, das heißt, je höher die thermische Stabilität des Reaktionsgemisches ist, desto geringer kann die Reaktionsdauer gewählt werden.

Zur Initiierung der Polymerisation ist für die thermisch zerfallenden Initiatoren der Eintrag von Wärme essentiell. Die Polymerisation kann für die thermisch zerfallenden Initiatoren durch Erwärmen auf 50 bis 160 °C, je nach Initiatortyp, initiiert werden.

Weiterhin kann es von Vorteil sein, die Polyacrylathaftklebemasse über ein anionisches Polymerisationsverfahren herzustellen. Hier werden als Reaktionsmedium bevorzugt inerte Lösungsmittel verwendet, wie z.B. aliphatische und cycloaliphatische Kohlenwasserstoffe, oder auch aromatische Kohlenwasserstoffe.

Das lebende Polymer wird in diesem Fall im allgemeinen durch die Struktur P_{L}(A)-Me repräsentiert, wobei Me ein Metall der Gruppe I, wie z.B. Lithium, Natrium oder Kalium, und P_{L}(A) ein wachsender Polymerblock aus den Monomeren A ist. Die Molmasse des herzustellenden Polymers wird durch das Verhältnis von Initiatorkonzentration zu Monomerkonzentration kontrolliert. Als geeignete Polymerisationsinitiatoren eignen sich z. B. n-Propyllithium, n-Butyllithium, sec-Butyllithium, 2-Naphthyllithium, Cyclohexyllithium oder Octyllithium, wobei diese Aufzählung nicht den Anspruch auf Vollständigkeit besitzt. Ferner sind Initiatoren auf Basis von Samarium-Komplexen zur Polymerisation von Acrylaten bekannt (Macromolecules, 1995, 28, 7886) und hier einsetzbar.

Weiterhin lassen sich auch difunktionelle Initiatoren einsetzen, wie beispielsweise 1,1,4,4-Tetraphenyl-1,4-dilithiobutan oder 1,1,4,4-Tetraphenyl-1,4-dilithioisobutan. Coinitiatoren lassen sich ebenfalls einsetzen. Geeignete Coinitiatoren sind unter anderem Lithiumhalogenide, Alkalimetallalkoxide oder Alkylaluminium-Verbindungen. In einer sehr bevorzugten Version sind die Liganden und Coinitiatoren so gewählt, daß Acrylatmonomere, wie z.B. n-Butylacrylat und 2-Ethylhexylacrylat, direkt polymerisiert werden können und nicht im Polymer durch eine Umesterung mit dem entsprechenden Alkohol generiert werden müssen.

Zur Herstellung von Polyacrylathaftklebemassen mit einer engen Molekulargewichtsverteilung eignen sich auch kontrollierte radikalische Polymerisationsmethoden. Zur Polymerisation wird dann bevorzugt ein Kontrollreagenz der allgemeinen Formel eingesetzt: 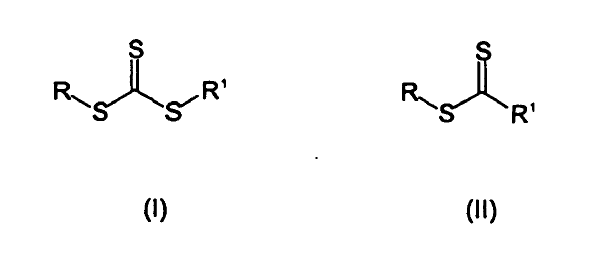 worin R und R¹ unabhängig voneinander gewählt oder gleich sind
- verzweigte und unverzweigte C₁- bis C₁₈-Alkylreste; C₃- bis C₁₈-Alkenylreste; C₃- bis C₁₈-Alkinylreste;
- C₁- bis C₁₈-Alkxoyreste
- durch zumindest eine OH-Gruppe oder ein Halogenatom oder einen Silylether substituierte C₁- bis C₁₈₋Alkylreste; C₃- bis C₁₈-Alkenylreste; C₃- bis C₁₈-Alkinylreste;
- C₂-C₁₈-Hetero-Alkylreste mit mindestens einem O-Atom und/oder einer NR*-Gruppe in der Kohlenstoffkette, wobei R* ein beliebiger (insbesondere organischer) Rest sein kann,
- mit zumindest einer Estergruppe, Amingruppe, Carbonatgruppe, Cyanogruppe, Isocyanogruppe und/oder Epoxidgruppe und/oder mit Schwefel substituierte C₁-C₁₈-Alkylreste, C₃-C₁₈-Alkenylreste, C₃-C₁₈-Alkinylreste;
- C₃-C₁₂-Cycloalkylreste
- C₆-C₁₈- Aryl- oder Benzylreste
- Wasserstoff
darstellen.

Kontrollreagenzien des Typs (I) bestehen bevorzugt aus folgenden weiter eingeschränkten Verbindungen:
Halogenatome sind hierbei bevorzugt F, Cl, Br oder I, mehr bevorzugt Cl und Br. Als Alkyl-, Alkenyl- und Alkinylreste in den verschiedenen Substituenten eignen sich hervorragend sowohl lineare als auch verzweigte Ketten.
Beispiele für Alkylreste, welche 1 bis 18 Kohlenstoffatome enthalten, sind Methyl, Ethyl, Propyl, Isopropyl, Butyl, Isobutyl, t-Butyl, Pentyl, 2-Pentyl, Hexyl, Heptyl, Octyl, 2-Ethylhexyl, t-Octyl, Nonyl, Decyl, Undecyl, Tridecyl, Tetradecyl, Hexadecyl und Octadecyl.
Beispiele für Alkenylreste mit 3 bis 18 Kohlenstoffatomen sind Propenyl, 2-Butenyl, 3-Butenyl, Isobutenyl, n-2,4-Pentadienyl, 3-Methyl-2-butenyl, n-2-Octenyl, n-2-Dodecenyl, Isododecenyl und Oleyl.
Beispiele für Alkinyl mit 3 bis 18 Kohlenstoffatomen sind Propinyl, 2-Butinyl, 3-Butinyl, n-2-Octinyl und n-2-Octadecinyl.
Beispiele für Hydroxy-substituierte Alkylreste sind Hydroxypropyl, Hydroxybutyl oder Hydroxyhexyl.
Beispiele für Halogen-substituierte Alkylreste sind Dichlorobutyl, Monobromobutyl oder Trichlorohexyl.
Ein geeigneter C₂-C₁₈-Hetero-Alkylrest mit mindestens einem O-Atom in der Kohlenstoffkette ist beispielsweise -CH₂-CH₂-O-CH₂-CH₃.
Als C₃-C₁₂-Cycloalkylreste dienen beispielsweise Cyclopropyl, Cyclopentyl, Cyclohexyl oder Trimethylcyclohexyl.
Als C₆-C₁₈-Arylreste dienen beispielsweise Phenyl, Naphthyl, Benzyl, 4-tert.-Butylbenzyl-oder weitere substituierte Phenyl, wie z.B. Ethyl, Toluol, Xylol, Mesitylen, Isopropylbenzol, Dichlorobenzol oder Bromtoluol.
Die vorstehenden Auflistungen dienen nur als Beispiele für die jeweiligen Verbindungsgruppen und besitzen keinen Anspruch auf Vollständigkeit.

Weiterhin sind auch Verbindungen der folgenden Typen als Kontrollreagenzien einsetzbar 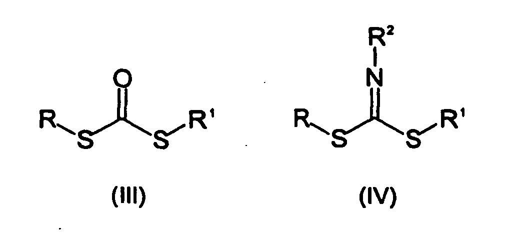 wobei R² ebenfalls unabhängig von R und R¹ aus der oben aufgeführten Gruppe für diese Reste gewählt werden kann.

Beim konventionellen ,RAFT-Prozeß' wird zumeist nur bis zu geringen Umsätzen polymerisiert (WO 98/01478 A1), um möglichst enge Molekulargewichtsverteilungen zu realisieren. Durch die geringen Umsätze lassen sich diese Polymere aber nicht als Haftklebemassen und insbesondere nicht als Schmelzhaftkleber einzetzen, da der hohe Anteil an Restmonomeren die klebtechnischen Eigenschaften negativ beeinflußt, die Restmonomere im Aufkonzentrationsprozeß das Lösemittelrecyclat verunreinigen und die entsprechenden Selbstklebebänder ein sehr hohes Ausgasungsverhalten zeigen würden. Um diesen Nachteil niedriger Umsätze zu umgehen, wird in einer besonders bevorzugten Vorgehensweise die Polymerisation mehrfach initiiert.

Als weitere kontrollierte radikalische Polymerisationsmethode können Nitroxid-gesteuerte Polymerisationen durchgeführt werden. Zur Radikalstabilisierung werden in günstiger Vorgehensweise Nitroxide des Typs (Va) oder (Vb) eingesetzt: 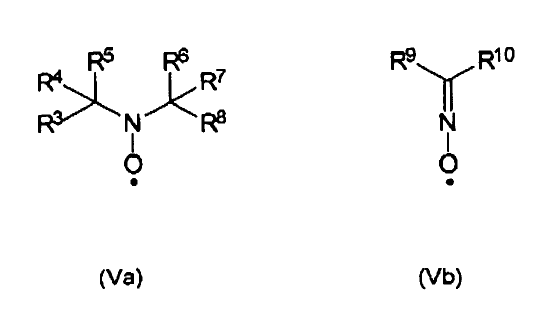 wobei R³, R⁴, R⁵, R⁶, R⁷, R⁸, R⁹, R¹⁰ unabhängig voneinander folgende Verbindungen oder Atome bedeuten:
i) Halogenide, wie z.B. Chlor, Brom oder lod
ii) lineare, verzweigte, cyclische und heterocyclische Kohlenwasserstoffe mit 1 bis 20 Kohlenstoffatomen, die gesättigt, ungesättigt oder aromatisch sein können,
iii) Ester -COOR¹¹, Alkoxide -OR¹² und/oder Phosphonate -PO(OR¹³)₂,
wobei R¹¹, R¹² oder R¹³ für Reste aus der Gruppe ii) stehen.

Verbindungen der (Va) oder (Vb) können auch an Polymerketten jeglicher Art gebunden sein (vorrangig in dem Sinne, daß zumindest einer der oben genannten Reste eine derartige Polymerkette darstellt) und somit zum Aufbau der Blockcopolymere als Makroradikale oder Makroregler genutzt werden.

Mehr bevorzugt werden kontrollierte Regler für die Polymerisation von Verbindungen des Typs:
- 2,2,5,5-Tetramethyl-1-pyrrolidinyloxyl (PROXYL), 3-Carbamoyl-PROXYL, 2,2-dimethyl-4,5-cyclohexyl-PROXYL, 3-oxo-PROXYL, 3-Hydroxylimine-PROXYL, 3-Aminomethyl-PROXYL, 3-Methoxy-PROXYL, 3-t-Butyl-PROXYL, 3,4-Di-t-butyl-PROXYL
- 2,2,6,6-Tetramethyl-1-piperidinyloxy (TEMPO), 4-Benzoyloxy-TEMPO, 4-Methoxy-TEMPO, 4-Chloro-TEMPO, 4-Hydroxy-TEMPO, 4-Oxo-TEMPO, 4-Amino-TEMPO, 2,2,6,6,-Tetraethyl-1-piperidinyloxyl, 2,2,6-Trimethyl-6-ethyl-1-piperidinyloxyl
- N-tert.-Butyl-1-phenyl-2-methyl propyl Nitroxid
- N-tert.-Butyl-1-(2-naphtyl)-2-methyl propyl Nitroxid
- N-tert.-Butyl-1-diethylphosphono-2,2-dimethyl propyl Nitroxid
- N-tert.-Butyl-1-dibenzylphosphono-2,2-dimethyl propyl Nitroxid
- N-(1-Phenyl-2-methyl propyl)-1-diethylphosphono-1-methyl ethyl Nitroxid
- Di-t-Butylnitroxid
- Diphenylnitroxid
- t-Butyl-t-amyl Nitroxid

US 4,581,429 A offenbart ein kontrolliert radikalisches Polymerisationsverfahren, das als Initiator eine Verbindung der Formel R'R"N-O-Y anwendet, worin Y eine freie radikalische Spezies ist, die ungesättigte Monomere polymerisieren kann. Die Reaktionen weisen aber im allgemeinen geringe Umsätze auf. Besonders problematisch ist die Polymerisation von Acrylaten, die nur zu sehr geringen Ausbeuten und Molmassen abläuft. WO 98/13392 A1 beschreibt offenkettige Alkoxyaminverbindungen, die ein symmetrisches Substitutionsmuster aufweisen. EP 735 052 A1 offenbart ein Verfahren zur Herstellung thermoplastischer Elastomere mit engen Molmassenverteilungen. WO 96/24620 A1 beschreibt ein Polymerisationsverfahren, bei dem sehr spezielle Radikalverbindungen wie z. B. phosphorhaltige Nitroxide, die auf Imidazolidin basieren, eingesetzt werden. WO 98/44008 A1 offenbart spezielle Nitroxyle, die auf Morpholinen, Piperazinonen und Piperazindionen basieren. DE 199 49 352 A1 beschreibt heterozyklische Alkoxyamine als Regulatoren in kontrolliert radikalischen Polymerisationen. Entsprechende Weiterentwicklungen der Alkoxyamine bzw. der korrespondierenden freien Nitroxide verbessern die Effizienz zur Herstellung von Polyacrylaten (Hawker, Beitrag zur Hauptversammlung der American Chemical Society, Frühjahr 1997; Husemann, Beitrag zum IUPAC World-Polymer Meeting 1998, Gold Coast).

Als weitere kontrollierte Polymerisationsmethode läßt sich in vorteilhafte Weise zur Synthese der Polyacrylathaftklebemassen die Atom Transfer Radical Polymerization (ATRP) einsetzen, wobei als Initiator bevorzugt monofunktionelle oder difunktionelle sekundäre oder tertiäre Halogenide und zur Abstraktion des(r) Halogenids(e) Cu-, Ni-, Fe-, Pd-, Pt-, Ru-, Os-, Rh-, Co-, Ir-, Ag- oder Au-Komplexe (EP 0 824 111 A1; EP 826 698 A1; EP 824 110 A1; EP 841 346 A1; EP 850 957 A1) eingesetzt werden. Die unterschiedlichen Möglichkeiten der ATRP sind ferner in den Schriften US 5,945,491 A, US 5,854,364 A und US 5,789,487 A beschrieben.

Die bevorzugt nach einem der vorstehend geschilderten Verfahren hergestellten Polyacrylate werden vorteilhaft im Weiteren vernetzt, wobei besonders bevorzugt thermische Vernetzer eingesetzt werden, die unter Temperatureinwirkung reagieren. Als Vernetzer eignen sich z. B. Metallchelate, multifunktionelle Isocyanate oder multifunktionelle Amine. Für den Fall einer zusätzlichen Vernetzung über einen radikalischen Mechanismus lassen sich auch multifunktionelle Acrylate vorteilhaft als Vernetzer verwenden.
Als thermische Vernetzer eignen sich z. B. Aluminium-(III)-acetylacetonat, Titan-(IV)-acetylacetonat oder Eisen-(lll)-acetylacetonat. Es lassen sich aber auch z.B. die entsprechenden Zirkoniumverbindungen zur Vernetzung einsetzen. Neben den Acetylacetonaten eigenen sich ebenfalls die ensprechenden Metallalkoxide, wie z.B. Titan-(IV)-n-butoxid oder Titan-(IV)-isopropoxid.
Weiterhin lassen sich zur thermischen Vernetzung ebenfalls multifunktionelle Isocyanate einsetzen, wobei hier besonders auf Isocyanate der Firma Bayer mit dem Handelsnamen Desmodur^{™} hingewiesen sei. Weitere Vernetzer können multifunktionelle Epoxide, Aziridine, Oxazolidine oder Carbodiimide sein.

Vor der Vernetzung werden die Polyacrylate vorteilhaft auf einen Träger aufgetragen. Die Beschichtung erfolgt aus Lösung oder aus der Schmelze auf das Trägermaterial. Für den Auftrag aus der Schmelze wird das Lösemittel bevorzugt in einem Aufkonzentrationsextruder unter vermindertem Druck abgezogen, wobei beispielsweise Ein- oder Doppelschneckenextruder eingesetzt werden können, die vorteilhaft das Lösemittel in verschiedenen oder gleichen Vakuumstufen abdestillieren und über eine Feedvorwärmung verfügen. Das Polyacrylat wird dann auf dem Träger vernetzt.

Als Trägermaterialien für die Haftklebemasse, beispielsweise für Haftklebebänder, werden die dem Fachmann geläufigen und üblichen Materialien, wie Folien (Polyester, PET, PE, PP, BOPP, PVC), Vliese, Schäume, Gewebe und Gewebefolien sowie Trennpapier (Glassine, HDPE, LDPE) verwendet. Diese Aufzählung ist nicht abschließend.

Zu einer optionalen Vernetzung mit UV-Licht können den Polyacrylathaftklebemassen UV-absorbierende Photoinitiatoren zugesetzt werden. Nützliche Photoinitiatoren, welche sehr gut zu verwenden sind, sind Benzoinether, wie z. B. Benzoinmethylether und Benzoinisopropylether, substituierte Acetophenone, wie z. B. 2,2-Diethoxyacetophenon (erhältlich als Irgacure 651^{®} von Fa. Ciba Geigy^{®}), 2,2-Dimethoxy-2-phenyl-1-phenylethanon, Dimethoxyhydroxyacetophenon, substituierte □-Ketole, wie z. B. 2-Methoxy-2-hydroxypropiophenon, aromatische Sulfonylchloride, wie z. B. 2-Naphthyl sulfonylchlorid, und photoaktive Oxime, wie z. B. 1-Phenyl-1,2-propandion-2-(O-ethoxycarbonyl)oxim.

Die oben erwähnten und weitere einsetzbare Photoinititatioren und andere vom Typ Norrish I oder Norrish II können folgenden Reste enthalten: Benzophenon-, Acetophenon-, Benzil-, Benzoin-, Hydroxyalkylphenon-, Phenylcyclohexylketon-, Anthrachinon-, Trimethylbenzoylphosphinoxid-, Methylthiophenylmorpholinketon-, Aminoketon-, Azobenzoin-, Thioxanthon-, Hexarylbisimidazol-, Triazin-, oder Fluorenon, wobei jeder dieser Reste zusätzlich mit einem oder mehreren Halogenatomen und/oder einer oder mehreren Alkyloxygruppen und/oder einer oder mehreren Aminogruppen oder Hydroxygruppen substituiert sein kann. Ein repräsentativer Überblick wird von Fouassier: "Photoinititation, Photopolymerization and Photocuring: Fundamentals and Applications", Hanser-Verlag, München 1995, gegeben. Ergänzend kann Carroy et al. in "Chemistry and Technology of UV and EB Formulation for Coatings, Inks and Paints", Oldring (Hrsg.), 1994, SITA, London herangezogen werden.

Weiterhin ist es möglich, die Polyacrylathaftklebemasse mit Elektronenstrahlen zu vernetzen. Typische Bestrahlungsvorrichtungen, die zum Einsatz kommen können, sind Linearkathodensysteme, Scannersysteme bzw. Segmentkathodensysteme, sofern es sich um Elektronenstrahlbeschleuniger handelt. Eine ausführliche Beschreibung des Stands der Technik und die wichtigsten Verfahrensparameter findet man bei Skelhorne, Electron Beam Processing, in Chemistry and Technology of UV and EB formulation for Coatings, Inks and Paints, Vol. 1, 1991, SITA, London. Die typischen Beschleunigungsspannungen liegen im Bereich zwischen 50 kV und 500 kV, vorzugsweise 80 kV und 300 kV. Die angewandten Streudosen bewegen sich zwischen 5 bis 150 kGy, insbesondere zwischen 20 und 100 kGy.

Schließlich betrifft die Erfindung die Verwendung der vorstehend beschriebenen Haftklebemassen beziehungsweise der wie vorstehend beschrieben hergestellten Haftklebemassen für ein ein- oder doppelseitiges Klebeband, bestehend aus zumindest einem Träger und einer Schicht einer Haftklebemasse.

Eine vorteilhafte Verwendung liegt dabei in einem Klebeband, welches einen mehrschichtigen Produktaufbau besitzt, wobei zumindest eine der Schichten aus einer erfindungsgemäßen Haftklebemasse besteht und bevorzugt eine Dicke von mindestens 5 µm, besonders bevorzugt von mindestens 10 mm aufweist.

Als Trägermaterialien für derartige Haftklebebänder lassen sich besonders gut die im vorstehenden bereits beschriebenen Trägermaterialien einsetzen.

Das erfindungsgemäße Polyacrylathaftklebemasse läßt sich rückstandsfrei und ohne Zerstörung von Stahl entfernen, so daß insbesondere entsprechend ausgerüstete Klebebänder reversibel auf Stahl verklebt werden können.

### Beispiele

### Prüfmethoden

### A. Klebkraft

Die Prüfung der Schälfestigkeit (Klebkraft) erfolgte gemäß PSTC-1. Auf eine 25 µm dicke PET-Folie wird eine Haftklebeschicht mit 20 g/m² aufgebracht.
Ein 2 cm breiter Streifen dieses Musters wird auf eine Stahlplatte durch dreimaliges doppeltes Überrollen mittels einer 2 kg Rolle verklebt. Die Platte wird eingespannt und der Selbstklebestreifen über sein freies Ende an einer Zugprüfmaschine unter einem Schälwinkel von 180° mit einer Geschwindigkeit von 300 mm/min abgezogen.

### B. Thermische Lagerung - Klebkraft

Auf eine 25 µm dicke PET-Folie wird eine Haftklebeschicht mit 20 g/m² aufgebracht.
Ein 2 cm breiter Streifen dieses Musters wird in einem Trockenschrank für 3 Monate bei 60 °C gelagert. Anschließend wird auf eine Stahlplatte durch dreimaliges doppeltes Überrollen mittels einer 2 kg Rolle verklebt. Die Platte wird eingespannt und der Selbstklebestreifen über sein freies Ende an einer Zugprüfmaschine unter einem Schälwinkel von 180° mit einer Geschwindigkeit von 300 mm/min abgezogen.

### C. Klebkraft - Aufziehverhalten

Die Prüfung der Schälfestigkeit (Klebkraft) erfolgte gemäß PSTC-1. Auf eine 25 µm dicke PET-Folie wird eine 100 µm dicke Haftklebeschicht aufgebracht. Ein 2 cm breiter Streifen dieses Musters auf eine Stahl-Platte durch dreimaliges doppeltes Überrollen mittels einer 2 kg Rolle verklebt. Nach 72 h Verklebung wird die Platte eingespannt und der Selbstklebestreifen über sein freies Ende an einer Zugprüfmaschine unter einem Schälwinkel von 180° mit einer Geschwindigkeit von 300 mm/min abgezogen.

### D. Atomic Force Microscopy (AFM)

Die AFM-Messungen wurden mit dem Rafterkraftmikroskop Explorer der Fa. Topometrix durchgeführt. Der Scanbereich beträgt lateral 100 µm und 10 µm in z-Richtung. Die Messungen wurden im Pulse Force Mode durchgeführt (s. D. Sarid, Scanning Force Microscopy, In Oxford Series on Optical Science, M. Lapp, H. Stark, Eds., Oxford University Press, 1991). Das Speicheroszilloskop stammt von der Fa. Tektronix, der Cantilever FMR50 von der Fa. Nanosensors (1 N m⁻¹ < kₗₑᵥₑᵣ < 5 N m⁻¹).

### E. Gelpermeationschromatographie GPC

Die Bestimmung des mittleren Molekulargewichtes Mₙ und der Polydisperistät PD erfolgte über die Gelpermeationschromatographie. Als Eluent wurde THF mit 0,1 Vol.-% Trifluoressigsäure eingesetzt. Die Messung erfolgte bei 25 °C. Als Vorsäule wurde PSS-SDV, 5 µ, 10³ A, ID 8,0 mm x 50 mm verwendet. Zur Auftrennung wurden die Säulen PSS-SDV, 5 µ, 10³ sowie 10⁵ und 10⁶ mit jeweils ID 8,0 mm x 300 mm eingesetzt. Die Probenkonzentration betrug 4 g/l, die Durchflußmenge 1,0 ml pro Minute. Es wurde gegen PMMA-Standards gemessen.

### Prüfmusterherstellung

### Beispiel 1:

Ein für radikalische Polymerisationen konventioneller 2 L-Glasreaktor wurde mit 8 g Acrylsäure, 272 g 2-Ethylhexylacrylat, 120 g Isobornylacrylat und 266 g Aceton:Siedegrenzenbenzin 60/95 (1:1) befüllt. Nach 45 Minuten Durchleiten von Stickstoffgas unter Rühren wurde der Reaktor auf 58 °C hochgeheizt und 0,2 g Azoisobutyronitril (AIBN, Vazo 64^{™} , Fa. DuPont) gelöst in 10 g Aceton hinzugegeben. Anschließend wurde das äußere Heizbad auf 75 °C erwärmt und die Reaktion konstant bei dieser Außentemperatur durchgeführt. Nach 1 h Reaktionszeit wurde wiederum 0,2 g AIBN gelöst in 10 g Aceton hinzugegeben. Nach 5 Stunden Reaktionszeit wurden 0,8 g Bis-(4-tert.-Butylcyclohexanyl)-Peroxy-dicarbonat (Perkadox 16™, Fa Akzo Nobel) gelöst in 10 g Aceton hinzugegeben. Nach 6 Stunden wurde mit 100 g Siedegrenzenbenzin 60/95 verdünnt. Nach 7 Stunden Reaktionszeit wurden 0,8 g Bis-(4-tert.-Butylcyclohexanyl)-Peroxy-dicarbonat (Perkadox 16™, Fa Akzo Nobel) gelöst in 10 g Aceton hinzugegeben. Nach 10 Stunden wurde mit 150 g Siedegrenzenbenzin 60/95 verdünnt. Die Reaktion wurde nach 24 h Reaktionszeit abgebrochen und auf Raumtemperatur abgekühlt. Anschließend wurde das Polyacrylat mit 0,6 Gew.-% Aluminium-(IIII)-acetylacetonat (3 %ige Lösung Aceton) und 4 Gew.-% Stearinsäure abgemischt, auf einen Feststoffgehalt von 30 % mit Siedegrenzenbenzin 60/95 verdünnt und dann aus Lösung auf eine PET-Folie auf beschichtet. Nach Trocknung für 30 Minuten bei 120 °C betrug der Masseauftrag 20 g/m². Zur Analyse der klebtechnischen Eigenschaften wurden die Testmethoden A, B und C durchgeführt.

### Beispiel 2;

Es wurde analog Beispiel 1 vorgegangen. Das Polyacrylat wurde mit 5 Gew.-% Stearinsäure abgemischt und vernetzt. Zur Analyse der klebtechnischen Eigenschaften wurden die Testmethoden A, B und C durchgeführt.

### Beispiel 3:

Es wurde analog Beispiel 1 vorgegangen. Das Polyacrylat wurde mit 4,5 Gew.-% Stearinsäure abgemischt und vernetzt. Zur Analyse der klebtechnischen Eigenschaften wurden die Testmethoden A, B und C durchgeführt.

### Beispiel 4:

Ein für radikalische Polymerisationen konventioneller 2 L-Glasreaktor wurde mit 8 g Acrylsäure, 312 g 2-Ethylhexylacrylat, 80 g Isobornylacrylat und 170 g Aceton:Siedegrenzenbenzin 60/95 (1:1) befüllt. Nach 45 Minuten Durchleiten von Stickstoffgas unter Rühren wurde der Reaktor auf 58 °C hochgeheizt und 0,2 g Azoisobutyronitril (AIBN, Vazo 64^{™}, Fa. DuPont) gelöst in 10 g Aceton hinzugegeben. Anschließend wurde das äußere Heizbad auf 75 °C erwärmt und die Reaktion konstant bei dieser Außentemperatur durchgeführt. Nach 1 h Reaktionszeit wurde wiederum 0,2 g AIBN gelöst in 10 g Aceton hinzugegeben. Nach 5 Stunden Reaktionszeit wurden 0.8 g Bis-(4-tert.-Butylcyclohexanyl)-Peroxy-dicarbonat (Perkadox 16™, Fa Akzo Nobel) gelöst in 10 g Aceton hinzugegeben. Nach 6 Stunden wurde mit 100 g Siedegrenzenbenzin 60/95 verdünnt. Nach 7 Stunden Reaktionszeit wurden 0,8 g Bis-(4-tert.-Butylcyclohexanyl)-Peroxy-dicarbonat (Perkadox 16^{™}, Fa Akzo Nobel) gelöst in 10 g Aceton hinzugegeben. Nach 10 Stunden wurde mit 150 g Siedegrenzenbenzin 60/95 verdünnt. Die Reaktion wurde nach 24 h Reaktionszeit abgebrochen und auf Raumtemperatur abgekühlt. Anschließend wurde das Polyacrylat mit 0.6 Gew.-% Aluminium-(IIII)-acetylacetonat (3 %ige Lösung Aceton) und 3 % Stearinsäure abgemischt, auf einen Feststoffgehalt von 30 % mit Siedegrenzenbenzin 60/95 verdünnt und dann aus Lösung auf eine PET-Folie auf beschichtet. Nach Trocknung für 30 Minuten bei 120°C betrug der Masseauftrag 20 g/m². Zur Analyse der klebtechnischen Eigenschaften wurden die Testmethoden A, B und C durchgeführt.

### Beispiel 5:

Es wurde analog Beispiel 4 vorgegangen. Das Polyacrylat wurde mit 4 Gew.-% Stearinsäure abgemischt und vernetzt. Zur Analyse der klebtechnischen Eigenschaften wurden die Testmethoden A, B und C durchgeführt.

### Beispiel 6:

Es wurde analog Beispiel 4 vorgegangen. Das Polyacrylat wurde mit 5 Gew.-% Stearinsäure abgemischt und vernetzt. Zur Analyse der klebtechnischen Eigenschaften wurden die Testmethoden A, B und C durchgeführt.

### Beispiel 7:

Ein für radikalische Polymerisationen konventioneller 2 L-Glasreaktor wurde mit 8 g Acrylsäure, 312 g 2-Ethylhexylacrylat, 80 Stearylacrylat und 266 g Aceton:Siedegrenzenbenzin 60/95 (1:1) befüllt. Nach 45 Minuten Durchleiten von Stickstoffgas unter Rühren wurde der Reaktor auf 58 °C hochgeheizt und 0,2 g Azoisobutyronitril (AIBN, Vazo 64^{™} , Fa. DuPont) gelöst in 10 g Aceton hinzugegeben. Anschließend wurde das äußere Heizbad auf 75 °C erwärmt und die Reaktion konstant bei dieser Außentemperatur durchgeführt. Nach 1 h Reaktionszeit wurde wiederum 0,2 g AIBN gelöst in 10 g Aceton hinzugegeben. Nach 5 Stunden Reaktionszeit wurden 0,8 g Bis-(4-tert.-Butylcyclohexanyl)-Peroxy-dicarbonat (Perkadox 16^{™}, Fa Akzo Nobel) gelöst in 10 g Aceton hinzugegeben. Nach 6 Stunden wurde mit 100 g Siedegrenzenbenzin 60/95 verdünnt. Nach 7 Stunden Reaktionszeit wurden 0,8 g Bis-(4-tert-Butylcyclohexanyl)-Peroxy-dicarbonat (Perkadox 16^{™}, Fa Akzo Nobel) gelöst in 10 g Aceton hinzugegeben. Nach 10 Stunden wurde mit 150 g Siedegrenzenbenzin 60/95 verdünnt. Die Reaktion wurde nach 24 h Reaktionszeit abgebrochen und auf Raumtemperatur abgekühlt. Anschließend wurde das Polyacrylat mit 0,6 Gew.-% Aluminium-(IIII)-acetylacetonat (3 %ige Lösung Aceton) und 4 Gew.-% Stearinsäure abgemischt, auf einen Feststoffgehalt von 30 % mit Siedegrenzenbenzin 60/95 verdünnt und dann aus Lösung auf eine PET-Folie auf beschichtet. Nach Trocknung für 30 Minuten bei 120 °C betrug der Masseauftrag 20 g/m². Zur Analyse der klebtechnischen Eigenschaften wurden die Testmethoden A, B und C durchgeführt.

### Referenzbeispiel R1:

Ein für radikalische Polymerisationen konventioneller 2 L-Glasreaktor wurde mit 4 g Acrylsäure, 4 g Glycidylmethacrylat, 196 g 2-Ethylhexylacrylat, 196 g n-Butylacrylat und 266 g Aceton:Siedegrenzenbenzin 60/95 (1:1) befüllt. Nach 45 Minuten Durchleiten von Stickstoffgas unter Rühren wurde der Reaktor auf 58 °C hochgeheizt und 0,2 g Azoisobutyronitril (AIBN, Vazo 64^{™}, Fa. DuPont) gelöst in 10 g Aceton hinzugegeben. Anschließend wurde das äußere Heizbad auf 75 °C erwärmt und die Reaktion konstant bei dieser Außentemperatur durchgeführt. Nach 1 h Reaktionszeit wurde wiederum 0,2 g AIBN gelöst in 10 g Aceton hinzugegeben. Nach 5 Stunden Reaktionszeit wurden 0.8 g Bis-(4-tert.-Butylcyclohexanyl)-Peroxy-dicarbonat (Perkadox 16™, Fa Akzo Nobel) gelöst in 10 g Aceton hinzugegeben. Nach 6 Stunden wurde mit 100 g Siedegrenzenbenzin 60/95 verdünnt. Nach 7 Stunden Reaktionszeit wurden 0.8 g Bis-(4-tert.-Butylcyclohexanyl)-Peroxy-dicarbonat (Perkadox 16^{™}, Fa Akzo Nobel) gelöst in 10 g Aceton hinzugegeben. Nach 10 Stunden wurde mit 150 g Siedegrenzenbenzin 60/95 verdünnt. Die Reaktion wurde nach 24 h Reaktionszeit abgebrochen und auf Raumtemperatur abgekühlt. Anschließend wurde das Polyacrylat mit 0.3 Gew.-% Zinkchlorid 0.4 Gew.-% Desmodur^{™} L 75 (Fa. Bayer AG) und 5 Gew.-% Stearinsäure abgemischt, auf einen Feststoffgehalt von 30 % mit Siedegrenzenbenzin 60/95 verdünnt und dann aus Lösung auf eine PET-Folie auf beschichtet. Nach Trocknung für 30 Minuten bei 120°C betrug der Masseauftrag 20 g/m². Zur Analyse der klebtechnischen Eigenschaften wurden die Testmethoden A, B und C durchgeführt.

### Referenzbeispiel R2

Ein für radikalische Polymerisationen konventioneller 2 L-Glasreaktor wurde mit 4 g Acrylsäure, 8 g Glycidylmethacrylat, 388 g n-Butylacrylat und 266 g Aceton:Siedegrenzenbenzin 60/95 (1:1) befüllt. Nach 45 Minuten Durchleiten von Stickstoffgas unter Rühren wurde der Reaktor auf 58 °C hochgeheizt und 0,2 g Azoisobutyronitril (AIBN, Vazo 64^{™}, Fa. DuPont) gelöst in 10 g Aceton hinzugegeben. Anschließend wurde das äußere Heizbad auf 75 °C erwärmt und die Reaktion konstant bei dieser Außentemperatur durchgeführt. Nach 1 h Reaktionszeit wurde wiederum 0,2 g AIBN gelöst in 10 g Aceton hinzugegeben. Nach 5 Stunden Reaktionszeit wurden 0,8 g Bis-(4-tert.-Butylcyclohexanyl)-Peroxy-dicarbonat (Perkadox 16^{™}, Fa Akzo Nobel) gelöst in 10 g Aceton hinzugegeben. Nach 6 Stunden wurde mit 100 g Siedegrenzenbenzin 60/95 verdünnt. Nach 7 Stunden Reaktionszeit wurden 0,8 g Bis-(4-tert.-Butylcyclohexanyl)-Peroxy-dicarbonat (Perkadox 16^{™}, Fa Akzo Nobel) gelöst in 10 g Aceton hinzugegeben. Nach 10 Stunden wurde mit 150 g Siedegrenzenbenzin 60/95 verdünnt. Die Reaktion wurde nach 24 h Reaktionszeit abgebrochen und auf Raumtemperatur abgekühlt. Anschließend wurde das Polyacrylat mit 0,3 Gew.-% Zinkchlorid 0,4 Gew.-% Desmodur^{™} L 75 (Fa. Bayer AG) und 7 Gew.-% Stearinsäure abgemischt, auf einen Feststoffgehalt von 30 % mit Siedegrenzenbenzin 60/95 verdünnt und dann aus Lösung auf eine PET-Folie auf beschichtet. Nach Trocknung für 30 Minuten bei 120 °C betrug der Masseauftrag 20 g/m². Zur Analyse der klebtechnischen Eigenschaften wurden die Testmethoden A, B und C durchgeführt.

### Ergebnisse

Im folgenden wurden die klebtechnischen Eigenschaften der hergestellten Polymere untersucht. Die Referenzbeispiele 1 und 2 wurden mit einbezogen, da hier ebenfalls Stearinsäure zugesetzt wurde, aber diese Haftklebemassen nur teilverträglich sind. In diesen Fällen besitzen diese Haftklebemassen ebenfalls geringe Klebkräfte auf Stahl, aber diese werden durch harte Stearinsäuresegmente auf der Oberfläche erzeugt. Die Beispiele 1 bis 7 sind optisch sehr gut verträglich und die Stearinsäure löst sich somit hervorragend in der Polymermatrix. Der Einfluß auf die klebtechnischen Eigenschaften wurde in folgender Tabelle 1 untersucht.

**Tabelle 1:**

| Beispiel | KK auf Stahl sofort^{a} [N/cm] Test A | KK auf Stahl nach 72 h^{b} [N/cm] Test C | KK nach 60 °C^{c} [N/cm] Test B |
|---|---|---|---|
| 1 | 0,8 | 0,8 | 0,8 |
| 2 | 0,2 | 0,2 | 0,2 |
| 3 | 0,3 | 0,3 | 0,3 |
| 4 | 1,2 | 1,2 | 1,2 |
| 5 | 0,2 | 0,2 | 0,2 |
| 6 | 0,1 | 0,1 | 0,1 |
| 7 | 0,2 | 0,2 | 0,2 |
| R1 | 0,6 | 0,5 | 0,2 |
| R2 | 0,3 | 0,2 | 0,1 |

| | | | |
|---|---|---|---|
| ^{a}KK = Klebkraft auf Stahl-bei 23 °C und 50 % Luftfeuchtigkeit nach der Verklebung gemessen ^{b}KK = Klebkraft auf Stahl bei 23 °C und 50 % Luftfeuchtigkeit nach 72 Stunden Verklebung ^{c}KK = Klebkraft auf Stahl bei 23 °C und 50 % Luftfeuchtigkeit nach der Verklebung; die Haftklebebänder wurden zuvor bei 60 °C für 3 Monate gelagert. 20 g/m² Masseauftrag auf 25 µm dicke PET-Folie | | | |

Die in der Tabelle 1 aufgelisteten Daten verdeutlichen, daß die erfindungsgemäßen Polymere Haftklebemassen mit geringer Klebkraft sind. Durch Zugabe von Stearinsäure läßt sich die Klebkraft auf Stahl steuern. Durch Erhöhung des Anteils an Stearinsäure reduziert sich die Klebkraft. Die Beispiele 1 bis 7 verdeutlichen, daß die klebtechnischen Eigenschaften der Polymere sehr stabil ist. Sowohl nach längerer Verklebung als auch nach thermischer Lagerung weisen die Stearinsäure-abgemischten Massen eine konstante Klebkraft auf Stahl auf. Ais weitere Eigenschaft der Beispiele 1 bis 7 wurde festgestellt, daß alle Haftklebemassen reversibel sind und sich vom Stahlsubstrat wieder rückstandsfrei entfernen ließen.
Die Referenzbeispiele R1 und R2 wurden in Anlehnung an die DE 28 56 009 A1 angefertigt. Diese Massen enthalten ebenfalls Stearinsäure, die aber nicht kompatibel mit dem Polymer ist. Zudem ist ein Teil der Stearinsäure nicht gebunden und kann bei thermischer Lagerung heraus an die Oberfläche migrieren. Dadurch reduziert sich nach Lagerung über einen längeren Zeitraum das Klebkraftverhalten. Die Klebkraft sinkt - bei einer thermischen Lagerung von 3 Monaten bei 60 °C - dramatisch ab.

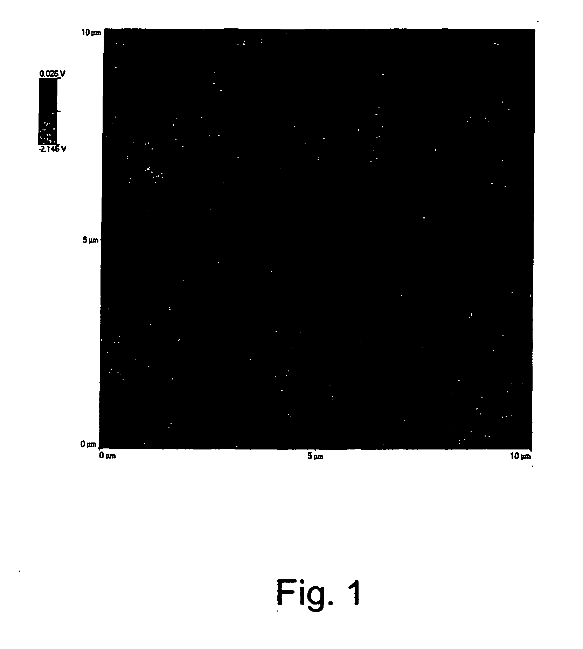

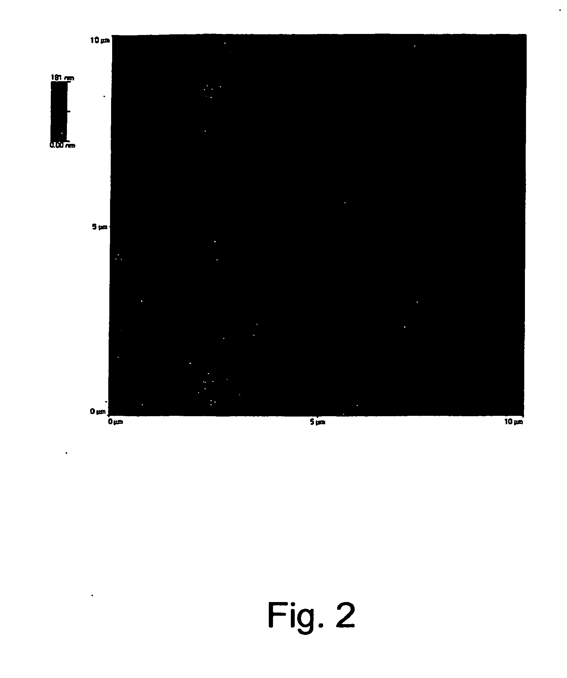

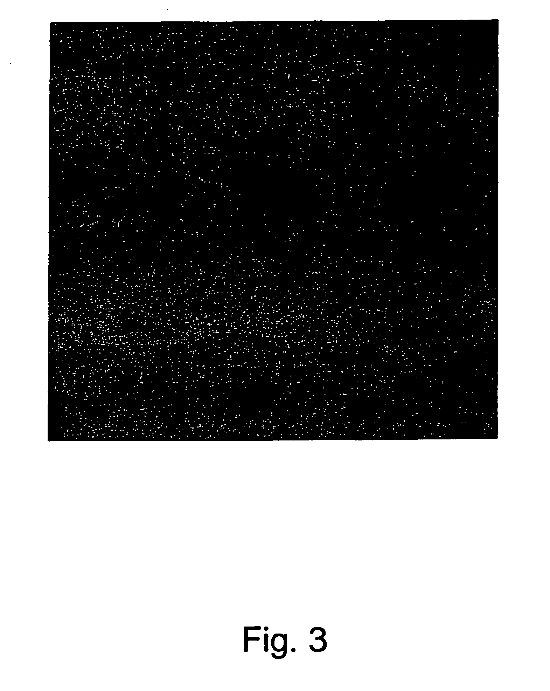

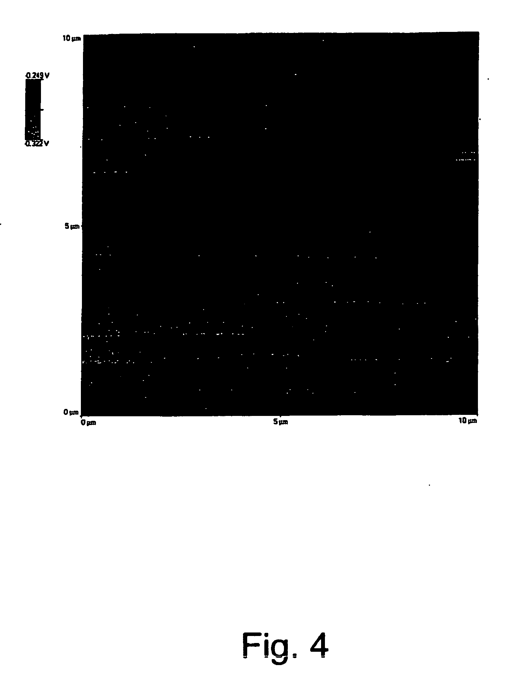

Zur Klärung dieses Verhaltens wurden von den Beispielen AFM-Aufnahmen angefertigt. Die AFM-Methode wird in Test D sowie der dort zitierten Literatur erklärt. Die Methode tastet mit einem Cantilever die Haftklebemassenoberfläche ab und detektiert über die Kraft, die benötigt wird, die Cantilever-Spitze in die Haftklebemasse einzudrücken und wieder herauszuziehen, harte und weiche Domänen. Damit läßt sich zum einen die Topographie der Oberfläche darstellen und zum anderen in harte und weiche/haftklebrige Segmente unterteilen. Im letzteren Adhäsionsmodus wurden die AFM-Bilder aufgenommen. Die AFM-Methode ist als Meßmethode sehr wichtig, da hier auch Unverträglichkeiten im Polymer nachgewiesen werden können, die unterhalb der mit dem menschlichen Auge erfaßbaren Wahrnehmung liegen. Diese Bereiche können ebenfalls sehr entscheidend für die haftklebrige Eigenschaften der Haftklebemasse sein, wenn Unverträglichkeiten vorliegen sollten.
Die Referenzbeispiele R1 und R2 wiesen ein instabiles klebtechnisches Verhalten auf und wurden daher zuerst einem solchen Test unterzogen. Die erhaltenen Bilder sind in den Fig. 1 und 2 dargestellt. Dabei zeigen Fig. 1 Referenzbeispiel R1 und Fig. 2 Referenzbeispiel R2. Den AFM-Aufnahmen kann eindeutig entnommen werden, daß in beiden Aufnahmen harte, wenig strukturierte Segmente (helle Bereiche) gekennzeichnet gebildet haben. Dies ist ein klares Indiz für eine Unverträglichkeit und der Ausbildung von Stearinsäure an der Oberfläche. Die dunkle Fläche stellt in diesen Abbildungen die haftklebrigen Segmente dar. Durch die AFM-Bilder kann das instabile klebtechnische Verhalten der Referenzmuster über einen längeren Zeitraum verstanden werden, da eine Unverträglichkeit des Polymers mit der Stearinsäure vorliegt und diese bei thermischer Lagerung durch eine verstärkte Migration der Stearinsäure noch erhöht wird.
Die Beispiele 1 bis 7 zeigen dagegen, daß die erfindungsgemäßen Haftklebemassen alle vollkommen homogen sind. Beispielhaft sind in Fig. 3 das Beispiel 1 und in Fig. 4 das Beispiel 4 dargestellt. Die unterschiedliche Darstellung der Helligkeit (hell und dunkel) ist in diesem Fall nur auf das Bildbearbeitungsprogramm zurückzuführen und korreliert nicht mit der absoluten Nachgiebigkeit des Polymers. Besonders wichtig ist, daß die AFM-Aufnahmen sehr einheitlich in Hinblick auf Haftklebrigkeit sind und keine unterschiedlichen harten und weichen Segmente aufweisen. In einigen Aufnahmen (Fig. 4) sind leichte Farbunterschiede zu erkennen, die aber auf die Meßungenauigkeit des Gerätes (Grundrauschen) zurückzuführen sind.

## Patentansprüche

1. Haftklebemasse auf Polyacrylatbasis, enthaltend zumindest eine Mischung aus
(i) einem Polymer einer Monomermischung aus zumindest den folgenden Komponenten
(i.a) 28 bis 93,9 Gew.-% (bezogen auf die Monomermischung) Acrylsäureester und/oder Methacrylsäureester mit der folgenden Formel
CH₂ = C(R₁)(COOR₂),
wobei R₁ = H oder CH₃ und R₂ ein linearer oder verzweigter Alkylrest mit 1 bis 14 C-Atomen ist,
(i.b) 5 bis 35 Gew.-% (bezogen auf die Monomermischung) Acrylsäureester und/oder Methacrylsäureester der folgenden Formel
CH₂ = C(R₃)(COOR₄),
wobei R₃ = H oder CH₃ und R₄ ein linearer oder verzweigter aliphatischer Alkylrest mit mindestens 16 C-Atomen oder ein cyclischer aliphatischer Rest mit mindestens 9 C-Atomen ist,
(i.c) 1,1 bis 7 Gew.-% (bezogen auf die Monomermischung) freie Acrylsäure und/oder Methacrylsäure
(ii) 1 bis 10 Gew.-% (bezogen auf das Polymergemisch) Stearinsäure,
**dadurch gekennzeichnet, daß**
• die Haftklebemasse homogen ist und keine Segmente mit einer Größe von > 5 nm aufweist
• die Haftklebemasse bei einem Masseauftrag von 20 g/m² eine Klebkraft auf Stahl von weniger als 1,5 N/cm aufweist und sich die Klebkraft bei einer Lagerung von 50 °C über einen Zeitraum von 3 Monaten nicht um mehr als 20 % verändert.

2. Haftklebemasse nach Anspruch 1, **dadurch gekennzeichnet, daß** als weitere Komponente der Monomermischung
(i.d) bis zu 30 Gew.-% olefinisch ungesättigte Monomere mit funktionellen Gruppen eingesetzt werden.

3. Haftklebemasse nach zumindest einem der vorangegangenen Ansprüche, **dadurch gekennzeichnet, daß** für die Monomere der Komponente (i.a) Acryl- und Methacrylsäureester mit Alkylgruppen bestehend aus 4 bis 14 C-Atomen, bevorzugt 4 bis 9 C-Atomen Acrylmomonere eingesetzt werden.

4. Haftklebemasse nach zumindest einem der vorangehenden Ansprüche, **dadurch gekennzeichnet, daß**
als Monomere im Sinne der Komponente (i.b) Isobornylacrylat und/oder Stearylacrylat verwendet werden.

5. Haftklebemasse nach zumindest einem der vorangehenden Ansprüche, **dadurch gekennzeichnet** durch
die Beimischung von Klebharzen, insbesondere solchen, die mit den Polymeren verträglich sind, bevorzugt zu einem Gewichtsanteil bis zu 40 Gew.-%, sehr bevorzugt bis zu 30 Gew.-% (bezogen auf die Haftklebemasse).

6. Haftklebemasse nach zumindest einem der vorangehenden Ansprüche, **dadurch gekennzeichnet, daß**
der Haftklebemasse Weichmacher, Füllstoffe, Keimbildner, Blähmittel, Compoundierungsmittel und/oder Alterungsschutzmittel zugesetzt sind.

7. Verfahren zur Herstellung einer Haftklebemasse nach zumindest einem der vorangehenden Ansprüche, wobei
• zunächst eine Monomermischung enthaltend zumindest die folgenden Komponenten:
(i.a) 28 bis 93,9 Gew.-% (bezogen auf die Monomermischung) Acrylsäureester und/oder Methacrylsäureester mit der folgenden Formel
CH₂ = C(R₁)(COOR₂),
wobei R₁ = H oder CH₃ und R₂ ein linearer oder verzweigter Alkylrest mit 1 bis 14 C-Atomen ist,
(i.b) 5 bis 35 Gew.-% (bezogen auf die Monomermischung)
Acrylsäureester und/oder Methacrylsäureester mit der folgenden Formel
CH₂ = C(R₃)(COOR₄),
wobei R₃ = H oder CH₃ und R₄ ein linearer oder verzweigter aliphatischer Alkylrest mit mindestens 16 C-Atomen oder ein cyclischer aliphatischer Rest mit mindestens 9 C-Atomen ist,
(i.c) 1,1 bis 7 Gew.-% (bezogen auf die Monomermischung) freie Acrylsäure und/oder Methacrylsäure
zu einem Polymer polymerisiert wird,
• woraufhin das Polymer mit
(ii) 1 bis 10 Gew.-% Stearinsäure,
vermischt wird,
• dem Polymergemisch weiterhin
(iii) 0,1 bis 1 Gew.-% eines mit Carbonsäuregruppen oder Hydroxygruppen reagierenden multifunktionellen thermischen Vernetzer
zugesetzt sind und
• eine Vernetzung des Polymergemisches derart durchgeführt wird, daß eine vernetzte Polyacrylathaftklebemasse resultiert.

8. Verfahren nach Anspruch 6, **dadurch gekennzeichnet, daß** das Polymergemisch vor der Vernetzung aus der Lösung oder aus der Schmelze auf einen Träger beschichtet wird und das auf den Träger beschichtete Polymergemisch vernetzt wird, so daß eine Haftklebemasse resultiert.

9. Verwendung der Haftklebemasse nach zumindest einem der Ansprüche 1 bis 5 oder der nach einem Verfahren gemäß zumindest einem der Ansprüche 6 oder 7 hergestellten Haftklebemasse für ein ein- oder doppelseitiges Klebeband, bestehend zumindest aus einem Träger und einer Schicht der Haftklebemasse.

10. Verwendung nach Anspruch 8, **gekennzeichnet durch** einen mehrschichtigen Produktaufbau des Klebebandes, insbesondere einen zwei-oder dreischichtigen Produktaufbau, wobei zumindest eine der Schichten aus einer Haftklebemasse entsprechend einem der vorangehenden Ansprüche besteht und bevorzugt eine Dicke von mindestens 5 µm, besonders bevorzugt von mindestens 10 µm aufweist.

11. Verwendung nach zumindest einem der Ansprüche 8 oder 9, **dadurch gekennzeichnet, daß**
für den Träger als Trägermaterialien Folien wie Polyester, PET, PE, PP, BOPP, PVC) oder Vliese, Schäume, Gewebe und Gewebefolien sowie Trennpapier (Glassine, HDPE, LDPE) verwendet werden.

## Claims

1. Polyacrylate-based pressure-sensitive adhesive comprising at least one mixture of
(i) a polymer of a monomer mixture comprising at least the following components:
(i.a) 28% to 93.9% by weight (based on the monomer mixture) of acrylic esters and/or methacrylic esters with the following formula
CH₂ = C(R₁)(COOR₂),
where R₁ is H or CH₃, and R₂ is a linear or branched alkyl radical having 1 to 14 C atoms,
(i.b) 5% to 35% by weight (based on the monomer mixture) of acrylic esters and/or methacrylic esters of the following formula
CH₂ = C(R₃)(COOR₄),
where R₃ is H or CH₃, and R₄ is a linear or branched aliphatic alkyl radical having at least 16 C atoms or a cyclic aliphatic radical having at least 9 C atoms,
(i.c) 1.1 % to 7% by weight (based on the monomer mixture) of free acrylic acid and/or methacrylic acid
(ii) 1% to 10% by weight (based on the polymer mixture) of stearic acid,
**characterized in that**
• the pressure-sensitive adhesive is homogeneous and has no segments with a size of > 5 nm
• at an application rate of 20 g/m₂, the pressure-sensitive adhesive has a bond strength to steel of less than 1.5 N/cm, and on storage at 50°C over a period of 3 months the bond strength does not change by more than 20%.

2. Pressure-sensitive adhesive according to Claim 1, **characterized in that** as a further component of the monomer mixture
(i.d) up to 30% by weight of olefinically unsaturated monomers having functional groups are used.

3. Pressure-sensitive adhesive according to at least one of the preceding claims, **characterized in that** for the monomers of component (i.a) acrylic and methacrylic esters having alkyl groups consisting of 4 to 14 C atoms, preferably 4 to 9 C atoms - acrylic monomers - are used.

4. Pressure-sensitive adhesive according to at least one of the preceding claims, **characterized in that** as monomers in the sense of component (i.b) use is made of isobornyl acrylate and/or stearyl acrylate.

5. Pressure-sensitive adhesive according to at least one of the preceding claims, **characterized by** the admixing of tackifier resins, more particularly those which are compatible with the polymers, preferably at a weight fraction of up to 40% by weight, very preferably up to 30% by weight (based on the pressure-sensitive adhesive).

6. Pressure-sensitive adhesive according to at least one of the preceding claims, **characterized in that** the pressure-sensitive adhesive is admixed with plasticizers, fillers, nucleators, expandants, compounding agents and/or ageing inhibitors.

7. Process for preparing a pressure-sensitive adhesive according to at least one of the preceding claims, where
• first of all a monomer mixture comprising at least the following components:
(i.a) 28% to 93.9% by weight (based on the monomer mixture) of acrylic esters and/or methacrylic esters with the following formula
CH₂ = C(R₁)(COOR₂),
where R₁ is H or CH₃, and R₂ is a linear or branched alkyl radical having 1 to 14 C atoms,
(i.b) 5% to 35% by weight (based on the monomer mixture) of acrylic esters and/or methacrylic esters of the following formula
CH₂ = C(R₃)(COOR₄),
where R₃ is H or CH₃, and R₄ is a linear or branched aliphatic alkyl radical having at least 16 C atoms or a cyclic aliphatic radical having at least 9 C atoms,
(i.c) 1.1% to 7% by weight (based on the monomer mixture) of free acrylic acid and/or methacrylic acid
is polymerized to a polymer,
• after which the polymer is mixed with
(ii) 1 % to 10% by weight of stearic acid,
• the polymer mixture is also admixed with
(iii) 0.1% to 1% by weight of a polyfunctional thermal crosslinker which reacts
with carboxylic acid groups or hydroxyl groups, and
• crosslinking of the polymer mixture is carried out so as to give a crosslinked polyacrylate pressure-sensitive adhesive.

8. Process according to Claim 6, **characterized in that**, prior to crosslinking, the polymer mixture is coated from solution or from the melt onto a carrier and the polymer mixture coated onto the carrier is crosslinked so as to give a pressure-sensitive adhesive.

9. Use of the pressure-sensitive adhesive according to at least one of Claims 1 to 5 or of the pressure-sensitive adhesive prepared by a process according to at least one of Claims 6 and 7 for a single- or double-sided adhesive tape consisting at least of a carrier and a layer of the pressure-sensitive adhesive.

10. Use according to Claim 8, **characterized by** a multi-layer construction of the adhesive tape product, more particularly a two- or three-layer construction, where at least one of the layers is composed of a pressure-sensitive adhesive corresponding to any one of the preceding claims and preferably has a thickness of at least 5 µm, more preferably of at least 10 µm.

11. Use according to at least one of Claims 8 and 9, **characterized in that** carrier materials used for the carrier are films such as polyesters, PET, PE, PP, BOPP, PVC, or nonwovens, foams, woven fabrics and woven films, and also release paper (glassine, HDPE, LDPE).

## Revendications

1. Masse autoadhésive à base de polyacrylate, contenant au moins un mélange
(i) d'un polymère d'un mélange de monomères au moins constitué par les composants suivants :
(i.a) 28 à 93,9% en poids (par rapport au mélange de monomères) d'ester de l'acide acrylique et/ou de l'acide méthacrylique présentant la formule suivante
CH₂=CH (R1) (COOR₂),
wobei
R₁ = H ou CH₃ et R₂ représente un radical alkyle linéaire ou ramifié comprenant 1 à 14 atomes de carbone,
(i.b) 5 à 35% en poids (par rapport au mélange de monomères) d'ester de l'acide acrylique et/ou de l'acide méthacrylique présentant la formule suivante CH₂=CH(R₃) (COOR₄),
où
R₃ = H ou CH₃ et R₄ représente un radical alkyle linéaire ou ramifié, aliphatique, comprenant au moins 16 atomes de carbone ou un radical aliphatique cyclique comprenant au moins 9 atomes de carbone,
(i.c) 1,1 à 7% en poids (par rapport au mélange de monomères) d'acide acrylique et/ou méthacrylique libre,
(ii) 1 à 10% en poids (par rapport au mélange polymère) d'acide stéarique, **caractérisée en ce que**
- la masse autoadhésive est homogène et ne présente pas de segments > 5 nm
- la masse autoadhésive présente, dans le cas d'une masse appliquée de 20 g/m², une adhésivité sur l'acier inférieure à 1,5 N/cm et l'adhésivité ne change pas de plus de 20% lors d'un entreposage à 50°C sur un laps de temps de 3 mois.

2. Masse autoadhésive selon la revendication 1, **caractérisée en ce qu'**on utilise comme autre composant du mélange de monomères
(i.d) jusqu'à 30% en poids de monomères oléfiniquement insaturés avec des groupes fonctionnels.

3. Masse autoadhésive selon au moins l'une quelconque des revendications précédentes, **caractérisée en ce qu'**on utilise pour les monomères du composant (i.a.) des esters de l'acide acrylique et méthacrylique avec des groupements alkyle constitués par 4 à 14 atomes de carbone, de préférence des monomères acryliques comprenant 4 à 9 atomes de carbone.

4. Masse autoadhésive selon au moins l'une quelconque des revendications précédentes, **caractérisée en ce qu'**on utilise, comme monomères dans le sens du composant (i.b) de l'acrylate d'isobornyle et/ou de l'acrylate de stéaryle.

5. Masse autoadhésive selon au moins l'une quelconque des revendications précédentes, **caractérisée par** le mélange de résines adhésives, en particulier celles qui sont compatibles avec les polymères, de préférence à raison d'une proportion pondérale jusqu'à 40% en poids, très préférablement jusqu'à 30% en poids (par rapport à la masse autoadhésive).

6. Masse autoadhésive selon au moins l'une quelconque des revendications précédentes, **caractérisée en ce que** la masse autoadhésive est mélangée avec des plastifiants, des charges, des agents de formation de germes, des agents gonflants, des agents de compoundage et/ou des agents de protection contre le vieillissement.

7. Procédé pour la préparation d'une masse autoadhésive selon au moins l'une quelconque des revendications précédentes, **caractérisée en ce qu'**on polymérise en un polymère
- d'abord un mélange de monomères contenant au moins les composants suivants :
(i.a) 28 à 93,9% en poids (par rapport au mélange de monomères) d'ester de l'acide acrylique et/ou de l'acide méthacrylique présentant la formule suivante
CH₂=CH (R₁) (COOR₂),
où
R₁ = H ou CH₃ et R₂ représente un radical alkyle linéaire ou ramifié comprenant 1 à 14 atomes de carbone,
(i.b) 5 à 35% en poids (par rapport au mélange de monomères) d'ester de l'acide acrylique et/ou de l'acide méthacrylique présentant la formule suivante CH₂=CH (R₃) (COOR₄),
où
R₃ = H ou CH₃ et R₄ représente un radical alkyle linéaire ou ramifié, aliphatique, comprenant au moins 16 atomes de carbone ou un radical aliphatique cyclique comprenant au moins 9 atomes de carbone,
(i.c) 1,1 à 7% en poids (par rapport au mélange de monomères) d'acide acrylique et/ou méthacrylique libre,
- puis on mélange le polymère avec
(ii) 1 à 10% en poids d'acide stéarique
- on ajoute en outre au mélange polymère
(iii) 0,1 à 1% en poids d'un réticulant thermique polyfonctionnel réagissant avec des groupes acide carboxylique ou hydroxy et
- on réalise une réticulation du mélange polymère de manière telle qu'on obtient une masse autoadhésive à base de polyacrylate réticulé.

8. Procédé selon la revendication 6, **caractérisé en ce que** le mélange de polymères est revêtu avant la réticulation à partir de la solution ou de la masse fondue sur un support et le mélange de polymères revêtu sur le support est réticulé de manière telle qu'on obtient une masse autoadhésive.

9. Utilisation de la masse autoadhésive selon l'une quelconque des revendications 1 à 5 ou de la masse autoadhésive préparée selon un procédé selon au moins l'une quelconque des revendications 6 ou 7 pour une bande adhésive monoface ou double face, constituée par au moins un support et une couche de masse autoadhésive.

10. Utilisation selon la revendication 8, **caractérisée par** une structure de produit à plusieurs couches de la bande adhésive, en particulier une structure de produit à deux ou trois couches, au moins une des couches étant constituée par une masse autoadhésive correspondant à l'une quelconque des revendications précédentes et présentant de préférence une épaisseur d'au moins 5 µm, de manière particulièrement préférée d'au moins 10 µm.

11. Utilisation selon au moins l'une quelconque des revendications 8 à 9, **caractérisée en ce qu'**on utilise pour le support, comme matériaux support, des feuilles telles que le polyester, le PET, le PE, le PP, le BOPP, le PVC ou des non-tissés, des mousses, des tissus et des feuilles en tissu ainsi qu'un papier de séparation (papier cristal, HDPE, LDPE).
